(19) Europäisches Patentamt
European Patent Office
Office européen des brevets

(11) Publication number: 0 156 453 B1

# (12) EUROPEAN PATENT SPECIFICATION

(45) Date of publication of patent specification: 14.06.89

(51) Int. Cl.[4]: G 02 B 3/00, G 02 B 9/02

(21) Application number: 85300175.8

(22) Date of filing: 10.01.85

## (54) Lens for an optical recording/reproducing apparatus.

(30) Priority: 13.01.84 JP 4575/84
10.12.84 JP 260410/84

(43) Date of publication of application:
02.10.85 Bulletin 85/40

(45) Publication of the grant of the patent:
14.06.89 Bulletin 89/24

(84) Designated Contracting States:
DE FR GB NL

(56) References cited:
EP-A-0 085 473

APPLIED OPTICS, vol. 21, no. 6, March 15,1982, New York, USA; N. YAMAMOTO et al. Selfoc microlens with a spherical surface", pages 1021-1023

The file contains technical information submitted after the application was filed and not included in this specification

(73) Proprietor: NIPPON SHEET GLASS COMPANY LIMITED
8, 4-chome Doshomachi
Higashi-ku Osaka (JP)

(72) Inventor: Ichikawa, Hiroyuki
3-11-11, Nigawakita
Takarazuka-shi Hyogo-ken (JP)
Inventor: Nishi, Hisami
2-1-104, 2-chome Nigawa-cho
Nishinomiya-shi Hyogo-ken (JP)
Inventor: Toyama, Minoru
11-2, 2-chome Takatsukasa
Takarazuka-shi Hyogo-ken (JP)

(74) Representative: Pilch, Adam John Michael et al
c/o D. Young & Co. 10 Staple Inn
London WC1V 7RD (GB)

(56) References cited:

APPLIED OPTICS, vol. 19, no. 7, April 1,1980,New York, USA; K. KIKUCHI et al. "Design of gradient-index spherical lenses for optical pickup systems", pages 1076-1080

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 156 453 B1

(56) References cited:
PATENT ABSTRACTS OF JAPAN, vol. 7, no. 146, 25th June 1983, page (P-206) (1291); & JP-A-58-059420 (NIHON ITA GLASS K.K.) 08-04-1983

PATENT ABSTRACTS OF JAPAN, vol. 7, no. 90, 14th April 1983, page (P-191) (1235); & JP-A-58-017407 (NIHON ITA GLASS K.K.) 01-02-1983

## Description

The present invention relates to a lens for an optical recording/reproducing apparatus such as an optical disk system or an optomagnetic disk system and to an optical recording/reproducing apparatus including such a lens.

In a previously-proposed optical disk system as shown in Figure 1 of the accompanying drawings, a beam 2 emitted from a light source 1 is transmitted through a beam splitter 3 and is collimated into a parallel beam by a collimator lens 4. The beam 2 is then focused onto a recording surface 6A of an optical disk 6 by an objective lens 5.

The beam 2 is reflected by the recording surface 6A, is converted into a parallel beam by the objective lens 5 and becomes incident on a photodetector 7, having passed through the collimator lens 4 and having been deflected by the beam splitter 3.

When tracking control in such an optical disk system is performed by the so-called 3-spot method, the beam 2 emitted from the light source 1 is split into three beams by a diffraction grating 8, and the three beams are focused onto the recording surface 6A.

In this case, the main beam is directed along the optical axis and two auxiliary beams are incident on positions of the objective lens 5 spaced from its optical axis. Therefore, unless monochromatic aberration including not only spherical aberration but also coma and other aberrations are corrected sufficiently, high-density recording/reproduction cannot be performed.

Even if only a single beam 2 is used, unless the coma and other aberrations of the objective lens 5 are corrected sufficiently, extremely high precision is required in assembly of the apparatus, resulting in expensive apparatus.

In order to improve the response characteristics of an optical pickup to focusing and tracking control, the objective lens 5 must be compact in size and light in weight.

As an example of such an objective lens 5, a compound lens of 2-group 3-lens configuration and of a general optical glass having a uniform refractive index is widely used, as described in Japanese Patent Disclosure No. 55-4068.

However, this type of lens has a large number of surfaces (6 in all) to be polished, and requires assembly and centering of respective lens components. Thus, such a lens requires a large number of assembly steps and manufacturing cost is accordingly high. If a plurality of lens groups are used as in this type of lens, a lens barrel must be used, additionally acting against the requirement of a light and compact lens.

In order to satisfy demand for a light and compact lens, a single aspherical lens made of a plastics material having a uniform refractive index has been proposed, as described in Japanese Patent Disclosure No. 50-156945.

This lens can be manufactured at low cost by utilizing a moulding technique. However, since the medium is a plastics material, the lens is subject to problems of low resistance to humidity and heat. The lens is also easily scratched and provides only low reliability. An aspherical lens made of glass is extremely expensive to polish and has not been used in practice to date, for this purpose.

A graded index lens has been proposed as a solution to problems with a lens made of a medium having a uniform refractive index. For example, U.S. Patent No. 3,729,253 describes a single spherical lens which has a refractive index gradient along the radial direction so that spherical aberration, coma and astigmatism of the 3rd order are reduced.

However, in this lens, spherical aberration of higher order, i.e., 5th or higher is not considered, although the lens is in fact subject to additional spherical aberration of a higher order. For this reason, imaging characteristics on the lens optical axis are poor, and the lens is not suitable for an optical disk system or the like which requires a high numerical aperture.

A lens for an optical disk system or the like must have a substantially zero spherical aberration of each order, must be able to focus the diffraction spot on the axis to a degree equivalent to the diffraction limit, and must have an rms value of wavefront aberration of about 0.07 $\lambda$ or less.

Japanese Patent Disclosure No. 55-6354 describes a design of a lens which can reduce spherical aberration and which is for use in a video disk.

In such a lens, correction for spherical aberration only is performed, and the sine condition representing the coma is not satisfied. In an embodiment of this lens, since the radius of curvature $R_2$ of one of its surfaces is negative and the surface has a convex shape, the deficiency amount of the Abbe's sine condition is increased with a decrease in $R_2$. The field of view is also limited due to coma. For these reasons, this lens is not practical.

A graded index lens in which both the spherical aberration and coma are corrected is described in Japanese Patent Disclosure No. 58-122512. However, a surface of this lens has a concave shape wherein its radius curvature $C_1$ satisfies $0.09 \leq C_1 \leq 0.14$ and the lens has a meniscus shape. Since polishing of the two surfaces in alignment with each other is not easy, the cost of the lens is high. The lens also has a central thickness *t* between 8 and 15 mm, and is heavier than a conventional 2-group 3-lens component lens. Thus, the advantages of light weight and compactness of a single lens are impaired.

For these reasons, conventional lenses cannot satisfy requirements in a lens for an optical recording/reproducing apparatus to a degree where at least spherical aberration and coma are sufficiently corrected to high orders, the lens is compact in size, light in weight, and inexpensive.

Accordingly, an optical recording/reproducing apparatus using such a lens cannot perform high-density recording/reproduction, extremely high precision in assembly of the apparatus is required, and response characteristics of an optical pickup to focussing and tracking control are poor.

According to the invention, there is provided a plano-convex lens for an optical recording/reproducing apparatus, wherein its refractive index n(r) at a position a distance *r* from its optical axis along a radial direction is given by:—

$$n^2(r)=n_0^2\{1-(g\cdot r)^2+h_4(g\cdot r)^4+h_6(g\cdot r)^6+h_8(g\cdot r)^8+\ldots\}$$

and the following conditions are satisfied:

$$3.0\geqslant R_1/(1+0.75S)\geqslant 0.8$$
$$1.40\leqslant n_0\leqslant 1.87-0.6\ g\cdot S$$
$$0.75\geqslant g\cdot f\cdot\geqslant 0.45$$
$$1.5\geqslant h_4\geqslant -2$$
$$0.5\leqslant d\leqslant 7\ \text{mm}$$

where

$n_0$ is the refractive index on the optical axis,

g, $h_4$, $h_6$, $h_8$ are coefficients,

$R_1$ is the radius of curvature of the convex surface of the lens in mm,

S is the working distance in mm,

f is the focal distance of the overall optical system at the image side in mm, and

d is the thickness of the lens at its centre in mm.

According to the invention there is also provided optical recording/reproducing apparatus including such a lens.

A lens according to the invention can be used in an optical recording/reproducing apparatus, such that at least spherical aberration and coma are corrected sufficiently to a high order; also the lens can be compact in size, light in weight and inexpensive.

Such optical recording/reproducing apparatus can perform high-density recording/reproduction, does not require very high precision in the assembly of the apparatus, and has excellent response characteristics of its optical pickup to focussing and tracking control.

The invention will now be described, by way of example, with reference to the accompanying drawings, in which:—

Figure 1 is a side schematic view showing the previously described conventional optical disk system;

Figure 2 is a side view showing an embodiment of the present invention; and

Figures 3 to 5 are graphs showing the aberrations in different examples of the present invention.

Referring to Figure 2, an objective lens 9 in the illustrated embodiment has a first surface 9A having a radius of curvature $R_1$ and a second surface 9B having a radius of curvature $R_2$. The objective lens 9 has a thickness *d*. A refractive index n(r) of the objective lens 9 at a position a distance *r* from the optical axis along the radial direction is expressed by a power series given by:

$$n^2(r)=n_0^2\{1-(g\cdot r)^2+h_4(g\cdot r)^4+h_6(g\cdot r)^6+h_8(g\cdot r)^8+\ldots\}$$

where $n_0$ is the refractive index on the optical axis, and g, $h_4$, $h_6$ and $h_8$ are coefficients. In this embodiment, the objective lens 9 is arranged at a position of a working distance S from an optical disk 6 of a transparent medium having a thickness *t*.

In this embodiment, when the focal distance at the image side of the entire system including the transparent medium of the optical disk 6 is represented by *f*, the objective lens 9 satisfies the following conditions:

$$R_2=\infty \qquad (1)$$

$$3.0\geqq R_1/(1+0.75S)\geqq 0.8 \qquad (2)$$

$$1.40\leqq n_0\leqq 1.87-0.6g\cdot S \qquad (3)$$

$$0.75\geqq g\cdot f\geqq 0.45 \qquad (4)$$

The condition (1) must be satisfied so as to allow the objective lens 9 to have a plano-convex shape, so that the lens is easy to polish and inexpensive to produce.

The condition (2) is for limiting the size of the objective lens 9. When the sine condition is to be satisfied with the term $R_1/(1+0.75S)$ smaller than the lower limit given by the condition (2), a thickness $t_s$ of the objective lens 9, i.e., the edge thickness becomes too small. Then, polishing of the lens is difficult. If the thickness $t_s$ is kept relatively large, the deficiency amount of the sine condition is increased in the positive direction.

When the sine condition is satisfied with the term $R_1/(1+0.75S)$ exceeding the upper limit given by the condition (2), the diameter and the central thickness *d* of the objective lens 9 increase, so that the objective lens 9 becomes large and heavy. As a result, good response characteristics to focusing and tracking control cannot be expected.

The condition (3) is for satisfying the sine condition. When the condition (3) is not satisfied, the amount of deficiency of the sine condition increases in the positive direction to increase coma, and the field of view of the objective lens 9 is narrowed.

The condition (4) is for correcting the spherical aberration. An objective lens 9 for an optical disk system generally has a large numeral aperture, so that aberrations up to high orders must be corrected. When the term g · f is lower than the lower limit given by the condition (4), the aberration of peripheral light is undercorrected due to aberration of high order, i.e., 7th order or higher which is caused by the first surface 9A. If aberration at the periphery of the objective lens 9 is corrected, aberration at an intermediate zone between the periphery and the optical axis is increased. In any case, if the term g · f is below the lower limit given by the condition (4), the aberration cannot be corrected.

When the term $g \cdot f$ exceeds the upper limit given by the condition (4), the difference in refractive index at the optical axis and the periphery of the objective lens 9 is increased, resulting in aberration of 7th order or higher gain. In this case, the rms value of the spherical aberration does not fall below 0.07 λ.

When a suitable value of the radius of curvature $R_1$ is selected in accordance with the condition (2) and the values of $n_0$ and *g* satisfying the conditions (3) and (4) for the selected value of the radius of curvature $R_1$ are suitably selected, the objective lens 9 can be rendered compact in size and light in weight and the sine condition can also be satisfied. Aberration of 7th order or higher can be corrected, and the spherical aberration can also be corrected.

As a result of this, a compact, lightweight and inexpensive objective lens 9 can be obtained wherein the residual wavefront aberration is within the diffraction limit, i.e., below 0.05 λ on the optical axis, the rms value within the field of view is below 0.07 λ, and the central thickness *d* is within the range between 0.5 and 7 mm.

If the conditions (1) to (4) are satisfied, a coefficient $h_4$ satisfies:

$$1.5 \geqq h_4 \geqq -2$$

Instead of the conditions (2) to (4) above, if the following conditions (2)' to (4)' are satisfied:

$$2.0 \geqq R_1/(1+0.75S) \geqq 0.9 \quad (2)'$$

$$1.40 \leqq n_0 \leqq 1.83-0.6g \cdot S \quad (3)'$$

$$0.61 \geqq g \cdot f \geqq 0.51 \quad (4)'$$

the aberration is corrected further.

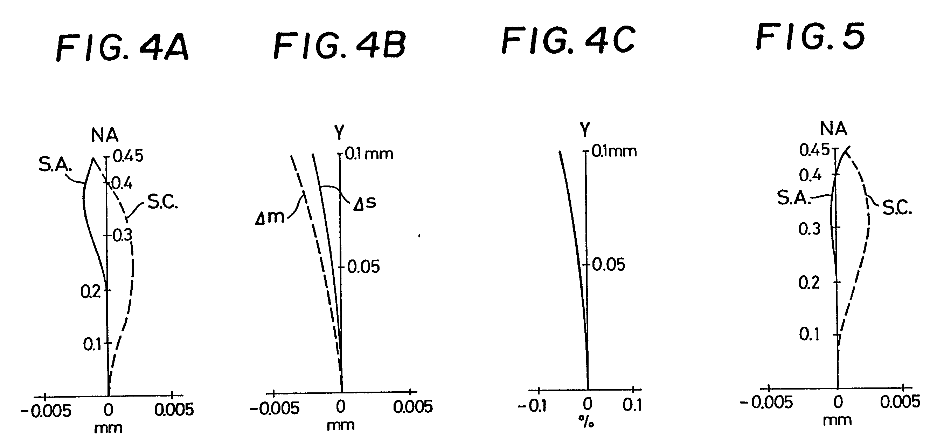

Figures 3 to 5 show aberration curves of Examples 1 to 3 wherein the refractive index of the transparent medium of the optical disk 6 is 1.57 and various other specifications are as given below. Solid lines in Figures 3A, 4A and 5 represent spherical aberration (S · A), and dotted lines therein show the deficiency amount of the sine condition (S · C). Solid lines in Figures 3B and 4B respectively represent astigmatism within a sagittal plane (ΔS) and dotted lines therein respectively represent astigmatism in a meridional plane (Δm). Figures 3C and 4C show distortion. In Figures 3B, 3C, 4B and 4C, the image height at the optical disk 6 is plotted along the Y-axis.

Example 1

$R_1$=2.586 mm, d=1.687 mm
$n_0$=1.58, g=0.16 $mm^{-1}$
$h_4$=−0.8, $h_6$=−2.5, $h_8$=0
$R_2$=∞, S=1.8 mm, f=3.526 mm
t=1.2 mm, NA at the image side=0.45

Example 2

$R_1$=3.075 mm, d=1.654 mm
$n_0$=1.59, g=0.13 $mm^{-1}$
$h_4$=−0.64, $h_6$=−4, $h_8$=0
$R_2$=∞, S=2.6 mm, f=4.319 mm
t=1.2 mm, NA at the image side=0.45

Example 3

$R_1$=2.5 mm, d=1.41 mm
$n_0$=1.6000, g=0.162 $mm^{-1}$
$h_4$=−0.68, $h_6$=−2.5, $h_8$=−10
$R_2$=∞, S=1.8 mm, f=4.319 mm
t=1.2 mm, NA at the image side=0.45

In Examples 1 to 3 above, a compact and light objective lens 9 for an optical disk system can be obtained wherein the diameter is below 5 mm, the thickness is below 1.7 mm, the weight is below 0.1 g, and the working distance is long. As can be seen from Figures 3 to 5, various types of aberration are corrected sufficiently.

As described above, in a lens for an optical recording/reproducing apparatus of the present invention, the first surface is a convex surface, the second surface is flat, and the refractive index has a predetermined distribution. Therefore, at least the spherical aberration and coma are satisfactorily corrected, and the rms value of the residual wavefront aberration is as small as 0.07 λ or less, within the field of view.

In the lens of the present invention, since the first surface is a convex surface, the numerical aperture is large and is easier to polish than an aspherical surface. Furthermore, since the second surface is flat and easy to polish, the lens is rendered less expensive.

In addition, the lens is a single lens and its aberration can be corrected sufficiently even if the diameter and central thickness are small. Therefore, the lens can be made compact in size and light in weight.

An optical recording/reproducing apparatus using a lens as described above as an objective lens can be based on the system shown in Figure 1. A lens as described above is used instead of the complex objective lens 5. Therefore, the apparatus is capable of high-density recording/reproduction, does not require very high precision in assembly, and allows good response characteristics of its optical pickup to focusing and tracking control.

**Claims**

1. A plano-convex lens for an optical recording/reproducing apparatus, wherein the refractive index n(r) of the lens at a position a distance r from the optical axis in a radial direction is given by:

$$n^2(r)=n_0^2[1-(g \cdot r)^2+h_4(g \cdot r)^4+h_6(g \cdot r)^6+h_8(g \cdot r)^8+\ldots]$$

characterised in that the following conditions are satisfied:

$3.0 \geq R_1/(1+0.75S) \geq 0.8$
$1.40 \leq n_0 \leq 1.87-0.6g \cdot S$
$0.75 \geq g \cdot f \cdot \geq 0.45$
$1.5 \geq h_4 \geq -2$
$0.5 \leq d \leq 7$ mm

where
$n_0$ is the refractive index on the optical axis,
g, $h_4$, $h_6$, $h_8$ are coefficients,
$R_1$ is the radius of curvature of the convex surface of the lens in mm,
S is the working distance in mm,
f is the focal distance of the overall optical system at the image side in mm, and
d is the thickness of the lens at its centre in mm.

2. A plano-convex lens according to claim 1, wherein the values of $n_0$, g, $R_1$, S and f satisfy the following conditions:

$2.0 \geq R_1/(1+0.75S) \geq 0.9$
$1.40 \leq n_0 \leq 1.83-0.6g \cdot S$
$0.61 \geq g \cdot f \geq 0.51$

3. A plano-convex lens according to claim 1 or claim 2 wherein the following conditions are satisfied:

$R_1=2.586$ mm, $d=1.687$ mm
$n_0=1.58$, $g=0.16$ $mm^{-1}$
$h_4=-0.8$, $h_6=-2.5$, $h_8=0$
$R_2=\infty$, $S=1.8$ mm, $f=3.526$ mm

4. A plano-convex lens according to claim 1 or claim 2, wherein the following conditions are satisfied:

$R_1=3.075$ mm, $d=1.654$ mm
$n_0=1.59$, $g=0.13$ $mm^{-1}$
$h_4=-0.64$, $h_6=-4$, $h_8=0$
$R_2=\infty$, $S=2.6$ mm, $f=4.319$ mm

5. A plano-convex lens according to claim 1 wherein the following conditions are satisfied:

$R_1=2.5$ mm, $d=1.41$ mm
$n_0=1.6000$, $g=0.162$ $mm^{-1}$
$h_4=-0.68$, $h_6=-2.5$, $h_8=-10$
$R_2=\infty$, $S=1.8$ mm, $f=4.319$ mm

6. An optical recording/reproducing apparatus including a plano-convex lens according to any one of the preceding claims as an objective lens.

**Patentansprüche**

1. Plankonvexe Linse für eine optische Aufnahme- oder Wiedergabevorrichtung, bei der der Brechungsindex n(r) der Linse an einer Stelle in einem radialen Abstand r von der optischen Achse gegeben ist durch:

$$n^2(r)=n_0^2[1-(g \cdot r)^2+h_4(g \cdot r)^4 +h_6(g \cdot r)^6+h_8(g \cdot r)^8+\ldots]$$

dadurch gekennzeichnet, daß die folgenden Bedingungen erfüllt sind:

$3,0 \geq R_1/(1+0,755) \geq 0,8$
$1,40 \leq n_0 \leq 1,87-0,6g \cdot S$
$0,75 \geq g \cdot f \cdot \geq 0,45$
$1,5 \geq h_4 \geq -2$
$0,5 \leq d \leq 7$ mm

wobei
$n_0$ der Brechungsindex an der optischen Achse,
g, $h_4$, $h_6$, $H_8$ Koeffizienten,
$R_1$ der Krümmungsradius der konvexen Oberfläche der Linse in mm,
S der Arbeitsabstand in mm,
f die Brennweite des gesamten optischen Systems auf der Bildseite in mm und
d die Dicke der Linse in ihrer Mitte in mm ist

2. Plankonvexe Linse nach Anspruch 1, bei der die Werte von $n_0$, g, $R_1$, S und f die folgenden Bedingungen erfüllen:

$2,0 \geq R_1/(1+0,755) \geq 0,9$
$1,40 \leq n_0 \leq 1,83-0,6g \cdot S$
$0,61 \geq g \cdot f \geq 0,51$

3. Plankonvexe Linse nach Anspruch 1 oder 2, bei der die folgenden Bedingungen erfüllt sind:

$R_1=2,586$ mm, $d=1,687$ mm
$n_0=1,58$, $g=0,16$ $mm^{-1}$
$h_4=-0,8$, $h_6=-2,5$, $h_8=0$
$R_2=\infty$, $S=1,8$ mm, $f=3,526$ mm

4. Plankonvexe Linse nach Anspruch 1 oder 2, bei der die folgenden Bedingungen erfüllt sind:

$R_1=3,075$ mm, $d=1,654$ mm
$n_0=1,59$, $g=0,13$ $mm^{-1}$
$h_4=-0,64$, $h_6=-4$, $h_8=0$
$R_2=\infty$, $S=2,6$ mm, $f=4,319$ mm

5. Plankonvexe Linse nach Anspruch 1, bei der die folgenden Bedingungen erfüllt sind:

$R_1=2,5$ mm, $d=1,41$ mm
$n_0=1,6000$, $g=0,162$ $mm^{-1}$
$h_4=-0,68$, $h_6=-2,5$, $h_8=-10$
$R_2=\infty$, $S=1,8$ mm, $f=4,319$ mm

6. Optische Aufnahme- oder Wiedergabevorrichtung mit einer plankonvexen Linse nach einem der vorstehenden Ansprüche als Objektivlinse.

**Revendications**

1. Lentille plan-convexe pour un appareil d'enregistrement ou de reproduction optique, dans laquelle l'indice de réfraction n(r) de la lentille en un point situé à une distance r de l'axe optique dans la direction radiale, est donné par:

$$n^2(r)=n_0^2[1-(g \cdot r)^2+h_4(g \cdot r)^4 +h_6(g \cdot r)^6+h_8(g \cdot r)^8+\ldots]$$

caractérisé en ce que les conditions suivantes sont satisfaites:

$$3,0 \geq R_1/(1+0,75S) \geq 0,8$$
$$1,40 \leq n_0 \leq 1,87-0,6g \cdot S$$
$$0,75 \geq g \cdot f \cdot \geq 0,45$$
$$1,5 \geq h_4 \geq -2$$
$$0,5 \leq d \leq 7 \text{ mm}$$

où

$n_0$ est l'indice de réfraction sur l'axe optique,

g, $h_4$, $h_6$, $h_8$ sont des coefficients,

$R_1$ est le rayon de courbure en mm de la surface convexe de la lentille,

S est la distance de travail en mm,

f est la distance focale n mm du système optique total du côté image, et

d est l'épaisseur en mm de la lentille en son centre.

2. Lentille plan-convexe selon la revendication 1, caractérisée en ce que les valeurs de $n_0$, g, $R_1$, S et f satisfont les conditions suivantes:

$$2,0 \geq R_1/(1+0,75S) \geq 0,9$$
$$1,40 \leq n_0 \leq 1,83-0,6g \cdot S$$
$$0,61 \geq g \cdot f \geq 0,51$$

3. Lentille plan-convexe selon l'une quelconque des revendications 1 et 2, caractérisée en ce que les conditions suivantes sont satisfaites:

$R_1=2,586$ mm; $d=1,687$ mm
$n_0=1,58$; $g=0,16$ $mm^{-1}$
$h_4=-0,8$; $h_6=-2,5$; $h_8=0$
$R_2=\infty$; $S=1,8$ mm; $f=3,526$ mm

4. Lentille plan-convexe selon l'une quelconque des revendications 1 et 2, caractérisée en ce que les conditions suivantes sont satisfaites:

$R_1=3,075$ mm; $d=1,654$ mm
$n_0=1,59$; $g=0,13$ $mm^{-1}$
$h_4=-0,64$; $h_6=-4$; $h_8=0$
$R_2=\infty$; $S=2,6$ mm; $f=4,319$ mm

5. Lentille plan-convexe selon la revendication 1, caractérisée en ce que les conditions suivantes sont satisfaites:

$R_1=2,5$ mm; $d=1,41$ mm
$n_0=1,6000$; $g=0,162$ $mm^{-1}$
$h_4=-0,68$; $h_6=-2,5$; $h_8=-10$
$R_2=\infty$; $S=1,8$ mm; $f=4,319$ mm

6. Appareil d'enregistrement ou de reproduction optique comprenant une lentille plan-convexe selon l'une quelconque des revendications précédentes comme lentille d'objectif.

FIG. 1

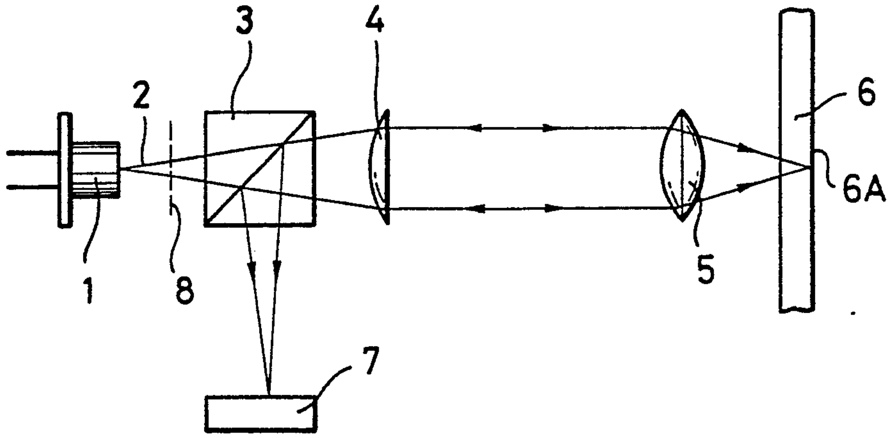


FIG. 2

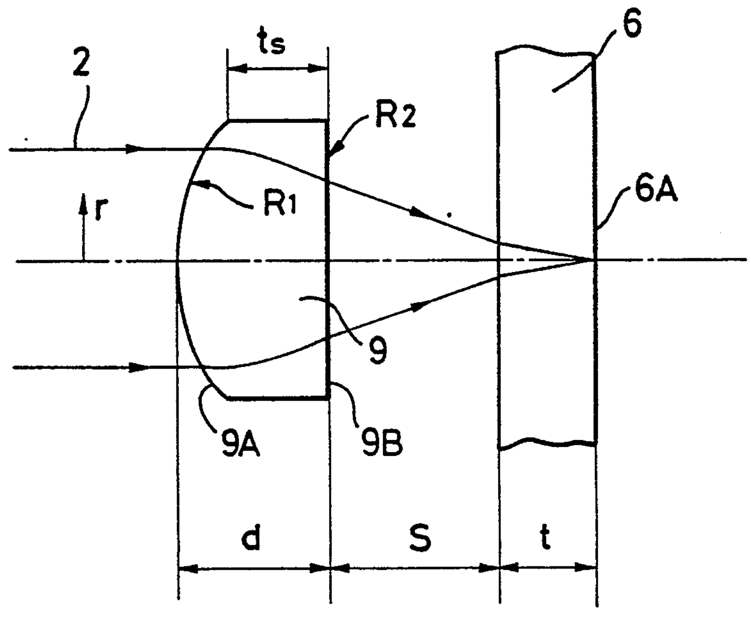

FIG. 3A

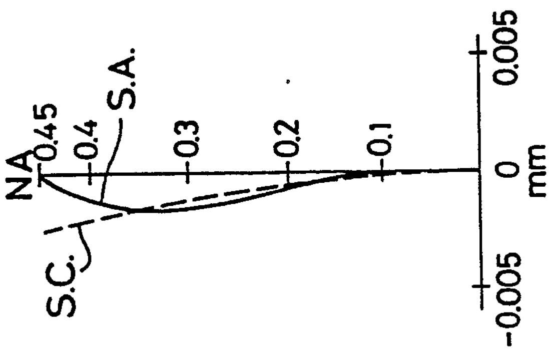


FIG. 3B

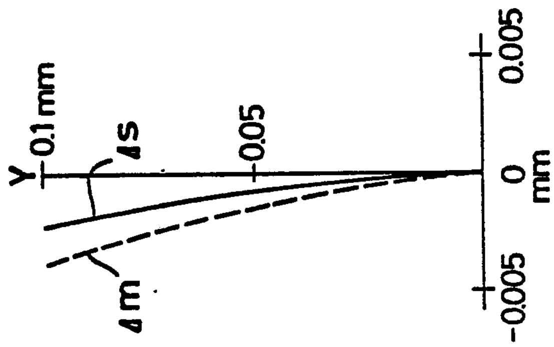


FIG. 3C

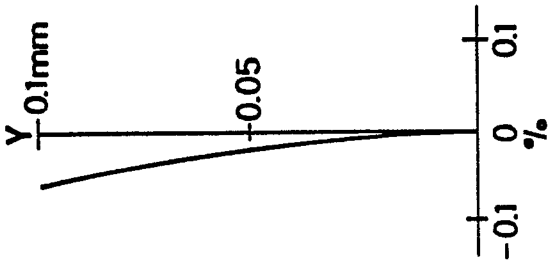

FIG. 4A

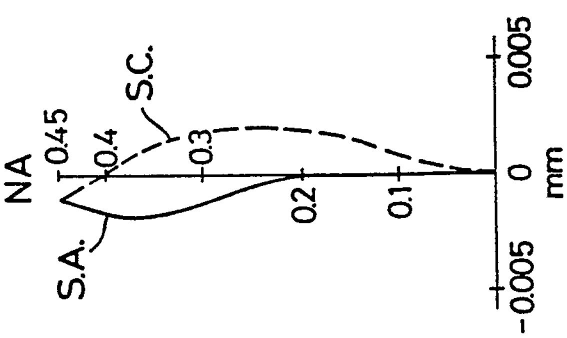


FIG. 4B

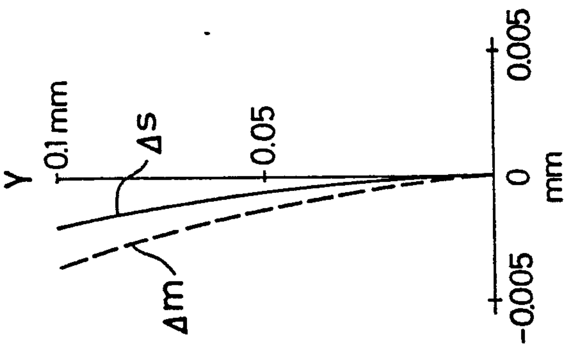


FIG. 4C

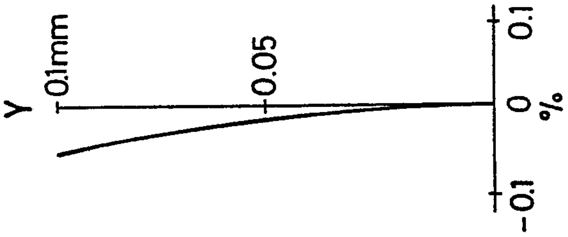


FIG. 5